# EUROPEAN PATENT SPECIFICATION

(11) **EP 1 944 939 B1**
(45) Date of publication and mention of the grant of the patent: **03.02.2016**
(21) Application number: 07022577.6
(22) Date of filing: 21.11.2007
(51) Int. Cl.: H04L 29/06, H04W 12/02

(54) **Methods and apparatuses for performing ciphering in a wireless communications system**
Verfahren und Vorrichtung zur Verschlüsselung in einem drahtlosen Kommunikationssystem
Procédé et appareil pour chiffrer la communication dans un système de communications sans fil

(30) Priority: 21.11.2006 US 860223 P
(43) Date of publication of application: 16.07.2008
(73) Proprietor: Innovative Sonic Limited, Ebene 72201 (MU)
(72) Inventor: Jiang, Sam Shiaw-Shiang, Peitou Taipei City (TW)
(74) Representative: Hoefer & Partner Patentanwälte mbB

(56) References cited:
- 3GPP RAN WG2: "Evolved Universal Terrestrial Radio Access (E-UTRA) and Evolved Universal Terrestrial Radio Access Network (E-UTRAN); Radio interface protocol aspects (Release 7), 3GPP TR 25.813 V7.1.0" INTERNET CITATION, September 2006 (2006-09), pages 1-41, XP002477991 [retrieved on 2008-04-24]
- SAMSUNG ET AL: "PDCP for E-UTRAN, R2-060906" INTERNET CITATION, [Online] 27 March 2006 (2006-03-27), - 31 March 2006 (2006-03-31) pages 1-3, XP002464337 Retrieved from the Internet: URL:http://www.3gpp.org/ftp/tsg_ran/WG2_RL 2/TSGR2_52/Documents/R2-060906.zip> [retrieved on 2008-01-11]
- "Universal Mobile Telecommunications System (UMTS); 3G security; Security architecture (3GPP TS 33.102 version 7.0.0 Release 7); ETSI TS 133 102" ETSI STANDARDS, LIS, vol. 3-SA3, no. V7.0.0, 1 December 2005 (2005-12-01), pages 1-64, XP014032863 ISSN: 0000-0001
- NOKIA ET AL: "MAC, RLC and RRC Layer Security" S3-060456, 3GPP TSG SA WG3 SECURITY #44, TALLINN, ESTONIA,, vol. S3-060456, 11 July 2006 (2006-07-11), pages 1-4, XP003022038

## Description

The present invention relates to a method and apparatus for handling protocol error in a wireless communications system according to the pre-characterizing clauses of claim 1 or 5.

The third generation (3G) mobile telecommunications system provides high frequency spectrum utilization, universal coverage, and high quality, high-speed multimedia data transmission, and also meets all kinds of QoS requirements simultaneously, providing diverse, flexible, two-way transmission services and better communication quality to reduce transmission interruption rates. According to the related protocol specifications, a protocol stack of the 3G mobile telecommunications system can be segmented into access stratum (AS) and non-access stratum (NAS). The AS comprises a Radio Resource Control (RRC), Radio Link Control (RLC), Media Access Control (MAC), Packet Data Convergence Protocol (PDCP), Broadcast/Multicast Control (BMC) and other sub-layers of different functions. Those skilled in the art are familiar with the operation of the above-mentioned sub-layers; therefore, they will not be further mentioned.

Long Term Evolution wireless communications system (LTE system), an advanced high-speed wireless communications system established upon the 3G mobile telecommunications system, supports only packet-switched transmission, and tends to implement both Medium Access Control (MAC) layer and Radio Link Control (RLC) layer in one single communication site, such as in Node B alone rather than in Node B and RNC (Radio Network Controller) respectively, so that the system structure becomes simpler.

A complete protocol specification is accomplished with lasting discussion, editing, and modification. Now, parts of the LTE structure are under Technical Report (TR) stage, meaning that the related protocol specifications are not finished. Therefore, many functions are still For Further Study (FFS).

According to the current system structure of the LTE system, the following can be summarized:
1. For User Plane, the layer structure is, from low to high, PHY (Physical layer), MAC, RLC, and PDCP.
2. For Control Plane, the layer structure is, from low to high, PHY, MAC, RLC, RRC, PDCP, and NAS.
3. For User Plane, ciphering is performed in PDCP.
4. For Control Plane, ciphering and IP for RRC messages are done in RRC and ciphering and IP for NAS messages are done in PDCP.
5. NAS messages may or may not be concatenated with RRC messages.
6. No IP from RRC for non-concatenated messages.
7. IP from RRC for concatenated NAS messages is FFS.
8. Protocol error detection and recovery function is performed in RLC.

Therefore, the prior art does not well specify the operation of ciphering from RRC for concatenated NAS messages.

Radio interface protocol aspects (Release 7), 3GPP TR 25.813 V7.1.0, XP002477991 discloses a method for performing ciphering in a wireless communications system. According to the method a user plane data and control plane data (NAS Signalling) is ciphered and the control plane data is integrity protected. Further, RRC messages are integrity protected and ciphered. Finally, in E-UTRAN, NAS messages are either concatenated with RRC messages or carried in RRC without concatenation.

This in mind, the present invention aims at providing a method and apparatus for performing ciphering in a wireless communications system, so as to accurately performing ciphering and enhance information security.

This is achieved by a method and apparatus for performing ciphering in a wireless communications system according to claims 1 or 5. The dependent claims pertain to corresponding further developments and improvements.

As will be seen more clearly from the detailed description following below, the claimed method for performing ciphering in a wireless communications system comprises performing a first ciphering procedure for a first Non-Access Stratum message to get a second Non-Access Stratum message, generating a Radio Resource Control message, which is not ciphered, in a Radio Resource Control layer, combining the second Non-Access Stratum message with the Radio Resource Control message to form a first concatenated message, performing a second ciphering procedure for both the NAS message and the RRC message within the first concatenated message to get a second concatenated message, and transmitting the second concatenated message.

In the following, the invention is further illustrated by way of example, taking reference to the accompanying drawings. Thereof
Fig. 1 is a function block diagram of a wireless communications device.
Fig. 2 is a diagram of program code of Fig. 1.
Fig. 3 and Fig. 4 are flowcharts of processes according to embodiments of the present invention.

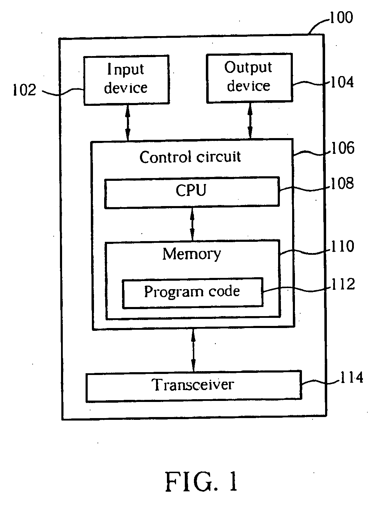

Please refer to Fig. 1, which is a functional block diagram of a communications device 100 in a wireless communications system. The wireless communications system is preferably the LTE system. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

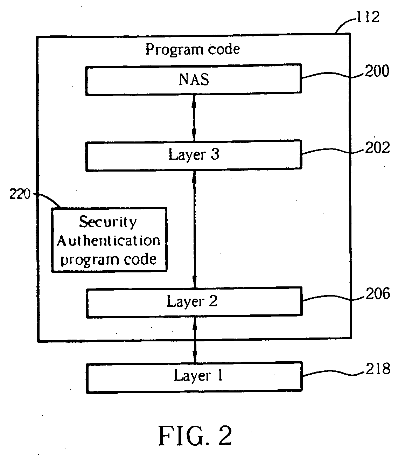

Please continue to refer to Fig. 2. Fig. 2 is a diagram of the program code 112 shown in Fig. 1. The program code 112 includes a Non Access Stratum (NAS) 200, a Layer 3 202, and a Layer 2 206, and is coupled to a Layer 1218. The NAS 200 can generate NAS messages for realizing NAS applications. The Layer 3 202 is preferably composed of an RRC layer and a PDCP layer, for performing resource control. The Layer 2 206 performs link control, and the Layer 1 218 performs physical connections.

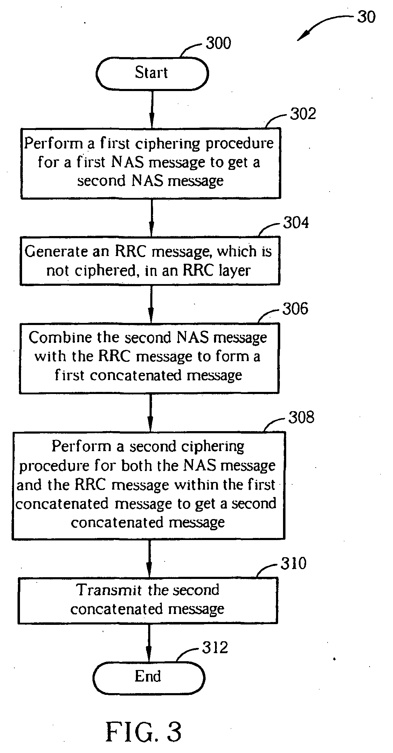

In order to enhance information security, the program code 112 can perform ciphering for messages, to protect user data and signaling information from being intercepted by unauthorized devices. In such a situation, the embodiment of the present invention provides a Security Authentication program code 220, for accurately performing ciphering. Please refer to Fig. 3, which illustrates a schematic diagram of a process 30. The process 30 is utilized for performing ciphering in a wireless communications system, and can be compiled into the Security Authentication program code 220. The process 30 comprises the following steps:
- Step 300:: Start.
- Step 302:: Perform a first ciphering procedure for a first NAS message to get a second NAS message.
- Step 304:: Generate an RRC message, which is not ciphered, in an RRC layer.
- Step 306:: Combine the second NAS message with the RRC message to form a first concatenated message.
- Step 308:: Perform a second ciphering procedure for both the NAS message and the RRC message within the first concatenated message to get a second concatenated message.
- Step 310:: Transmit the second concatenated message.
- Step 312:: End.

According to the process 30, after the concatenated message containing the RRC message and the NAS message is formed, the embodiment of the present invention performs the second ciphering procedure for both the NAS message and the RRC message within the concatenated message. Preferably, the first ciphering procedure is performed by the upper layer of the RRC layer, while the second ciphering procedure is performed by the RRC layer or its lower layer.

In such a situation, the second ciphering procedure is performed on both the NAS message and the RRC message in the concatenated message, so that extra field for discriminating the NAS message and the RRC message in the concatenated message is not necessary. Therefore, the second ciphering procedure becomes simple and does not use extra field. As a result, the deciphering procedure in the receiver can be simplified, so as to reduce deciphering errors.

Therefore, via the process 30, the embodiment of the present invention can accurately perform the ciphering procedure for the concatenated message containing the RRC message and the NAS message, simplify the deciphering procedure, reduce unnecessary field, so as to enhance information security, as well as transmission efficiency.

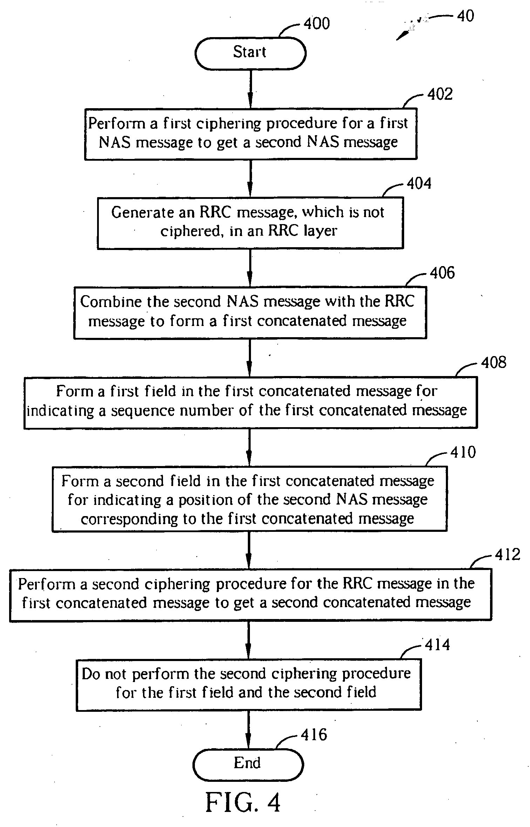

Please refer to Fig. 4, which illustrates a schematic diagram of a process 40. The process 40 is utilized for performing ciphering in a wireless communications system, and can be compiled into the Security Authentication program code 220. The process 30 comprises the following steps:
- Step 400:: Start.
- Step 402:: Perform a first ciphering procedure for a first NAS message to get a second NAS message.
- Step 404:: Generate an RRC message, which is not ciphered, in an RRC layer.
- Step 406:: Combine the second NAS message with the RRC message to form a first concatenated message.
- Step 408:: Form a first field in the first concatenated message for indicating a sequence number of the first concatenated message.
- Step 410:: Form a second field in the first concatenated message for indicating a position of the second NAS message corresponding to the first concatenated message.
- Step 412:: Perform a second ciphering procedure for the RRC message in the first concatenated message to get a second concatenated message.
- Step 414:: Do not perform the second ciphering procedure for the first field and the second field.
- Step 416:: End.

According to the process 40, after the concatenated message containing the RRC message and the NAS message is formed, the embodiment of the present invention only ciphers the RRC message in the concatenated message, and does not cipher the NAS message in the concatenated message again. As a result, unnecessary second-time ciphering on NAS message part is prevented. In such a situation, the feature of the process 40 is the addition of a second field in the concatenated message, for indicating the position of NAS message in the concatenated message. Then, the receiver can accurately decipher the concatenated message to get the original RRC message and NAS message. Preferably, the first ciphering procedure is performed by the upper layer of the RRC layer, while the second ciphering procedure is performed by the RRC layer or its lower layer.

Therefore, via the process 40, the embodiment of the present invention can accurately perform the ciphering procedure for the concatenated message containing the RRC message and the NAS message, so that the receiver can accurately perform deciphering, and thus information security can be enhanced.

In summary, the embodiment of the present invention provides variable implementations for ciphering protection of concatenated messages, so as to accurately perform ciphering protection, and enhance information security.

## Claims

1. A method for performing ciphering in a wireless communications system comprising:
performing a first ciphering procedure for a first Non-Access Stratum message to get a second Non-Access Stratum message (302);
generating a Radio Resource Control message, which is not ciphered, in a Radio Resource Control layer (304);
combining the second Non-Access Stratum message with the Radio Resource Control message to form a first concatenated message (306);
**characterized by** performing a second ciphering procedure for both the NAS message and the RRC message within the first concatenated message to get a second concatenated message (308); and
transmitting the second concatenated message (310).

2. The method of claim 1, **characterized in that** the first ciphering procedure is performed by an upper layer of the Radio Resource Control layer.

3. The method of claim 1, **characterized in that** the second ciphering procedure is performed by the Radio Resource Control layer.

4. The method of claim 1, **characterized in that** the second ciphering procedure is performed by a lower layer of the Radio Resource Control layer.

5. A communications device (100) for accurately performing ciphering protection in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
performing a first ciphering procedure for a first Non-Access Stratum message to get a second Non-Access Stratum message (302);
generating a Radio Resource Control message, which is not ciphered, in a Radio Resource Control layer (304);
combining the second Non-Access Stratum message with the Radio Resource Control message to form a first concatenated message (306);
**characterized by** performing a second ciphering procedure for both the NAS message and the RRC message within the first concatenated message to get a second concatenated message (308); and transmitting the second concatenated message (310).

6. The communications device of claim 5, **characterized in that** the first ciphering procedure is performed by an upper layer of the Radio Resource Control layer.

7. The communications device of claim 5, **characterized in that** the second ciphering procedure is performed by the Radio Resource Control layer.

8. The communications device of claim 5, **characterized in that** the second ciphering procedure is performed by a lower layer of the Radio Resource Control layer.

## Patentansprüche

1. Verfahren um Durchführen einer Verschlüsselung in einem drahtlosen Kommunikationssystem, umfassend:
Durchführen einer ersten Verschlüsselungsprozedur für eine Non-Access-Stratum-Nachricht zum Erhalten einer zweiten Non-Access-Stratum-Nachricht (302);
Erzeugen einer Funkressourcensteuernachricht, die nicht verschlüsselt ist, in einer Funkressourcensteuerungsebene (304);
Kombinieren der zweiten Non-Access-Stratum-Nachricht mit der Funkressourcensteuernachricht, um eine erste verkettete Nachricht (306) zu bilden;
**gekennzeichnet durch** Durchführen einer zweiten Verschlüsselungsprozedur sowohl für die NAS-Nachricht als auch die RRC-Nachricht in der ersten verketteten Nachricht, um eine zweite verkettete Nachricht (308) zu erhalten; und
Senden der zweiten verketteten Nachricht (310).

2. Verfahren nach Anspruch 1, **dadurch gekennzeichnet, dass** die erste Verschlüsselungsprozedur durch eine obere Ebene der Funkressourcensteuerungsebene durchgeführt wird.

3. Verfahren nach Anspruch 1, **dadurch gekennzeichnet, dass** die zweite Verschlüsselungsprozedur durch die Funkressourcensteuerungsebene durchgeführt wird.

4. Verfahren nach Anspruch 1, **dadurch gekennzeichnet, dass** die zweite Verschlüsselungsprozedur durch eine untere Ebene der Funkressourcensteuerungsebene durchgeführt wird.

5. Kommunikationsvorrichtung (100) zum präzisen Durchführen eines Verschlüsselungsschutzes in einem drahtlosen Kommunikationssystem, umfassend:
eine Steuerschaltung (106) zum Realisieren von Funktionen der Kommunikationsvorrichtung (100);
einen Prozessor (108), der in der Steuerschaltung (106) eingebaut ist, um einen Programmcode (112) zum Befehligen der Steuerschaltung (106) auszuführen; und
einen Speicher (110), der in der Steuerschaltung (106) eingebaut ist und mit dem Prozessor (108) zum Speichern des Programmcodes (112) verbunden ist;
wobei der Programmcode (112) umfasst:
Durchführen einer ersten Verschlüsselungsprozedur für eine erste Non-Access-Stratum-Nachricht, um eine zweite Non-Access-Stratum-Nachricht (302) zu erhalten;
Erzeugen einer Funkressourcensteuernachricht, die nicht verschlüsselt ist, in einer Funkressourcensteuerungsebene (304);
Kombinieren der zweiten Non-Access-Stratum-Nachricht mit der Funkressourcensteuernachricht, um eine erste verkettete Nachricht (306) zu bilden;
**gekennzeichnet durch** Durchführen einer zweiten Verschlüsselungsprozedur sowohl für die NAS-Nachricht als auch die RRC-Nachricht in der ersten verketteten Nachricht, um eine zweite verkettete Nachricht (308) zu erhalten; und
Senden der zweiten verketteten Nachricht (310).

6. Kommunikationsvorrichtung nach Anspruch 5, **dadurch gekennzeichnet, dass** die erste Verschlüsselungsprozedur durch eine obere Ebene der Funkressourcensteuerungsebene durchgeführt wird.

7. Kommunikationsvorrichtung nach Anspruch 5, **dadurch gekennzeichnet, dass** die zweite Verschlüsselungsprozedur durch die Funkressourcensteuerungsebene durchgeführt wird.

8. Kommunikationsvorrichtung nach Anspruch 5, **dadurch gekennzeichnet, dass** die zweite Verschlüsselungsprozedur durch eine untere Ebene der Funkressourcensteuerungsebene durchgeführten wird.

## Revendications

1. Procédé pour effectuer un chiffrement dans un système de communication sans fil comprenant le fait :
d'effectuer une première procédure de chiffrement pour un premier message de strate de non-accès pour obtenir un deuxième message de strate de non-accès (302) ;
de générer un message de commande de ressources radio, qui n'est pas chiffré, dans une couche de commande de ressources radio (304) ;
de combiner le deuxième message de strate de non-accès avec le message de commande de ressources radio pour former un premier message concaténé (306) ;
**caractérisé par** le fait d'effectuer une deuxième procédure de chiffrement à la fois pour le message NAS et le message RRC dans le premier message concaténé pour obtenir un deuxième message concaténé (308) ; et
de transmettre le deuxième message concaténé (310).

2. Procédé de la revendication 1, **caractérisé en ce que** la première procédure de chiffrement est effectuée par une couche supérieure de la couche de commande de ressources radio.

3. Procédé de la revendication 1, **caractérisé en ce que** la deuxième procédure de chiffrement est effectuée par la couche de commande de ressources radio.

4. Procédé de la revendication 1, **caractérisé en ce que** la deuxième procédure de chiffrement est effectuée par une couche inférieure de la couche de commande de ressources radio.

5. Dispositif de communication (100) pour effectuer avec précision une protection de chiffrement dans un système de communication sans fil comprenant :
un circuit de commande (106) pour réaliser des fonctions du dispositif de communication (100) ;
un processeur (108) installé dans le circuit de commande (106), pour exécuter un code de programme (112) afin de commander le circuit de commande (106) ; et
une mémoire (110) installée dans le circuit de commande (106) et couplée au processeur (108) pour stocker le code de programme (112) ;
dans lequel le code de programme (112) comprend le fait :
d'effectuer une première procédure de chiffrement pour un premier message de strate de non-accès pour obtenir un deuxième message de strate de non-accès (302) ;
de générer un message de commande de ressources radio, qui n'est pas chiffré, dans une couche de commande de ressources radio (304) ;
de combiner le deuxième message de strate de non-accès avec le message de commande de ressources radio pour former un premier message concaténé (306) ;
**caractérisé par** le fait d'effectuer une deuxième procédure de chiffrement à la fois pour le message NAS et le message RRC dans le premier message concaténé pour obtenir un deuxième message concaténé (308) ; et
de transmettre le deuxième message concaténé (310).

6. Dispositif de communication de la revendication 5, **caractérisé en ce que** la première procédure de chiffrement est effectuée par une couche supérieure de la couche de commande de ressources radio.

7. Dispositif de communication de la revendication 5, **caractérisé en ce que** la deuxième procédure de chiffrement est effectuée par la couche de commande de ressources radio.

8. Dispositif de communication de la revendication 5, **caractérisé en ce que** la deuxième procédure de chiffrement est effectuée par une couche inférieure de la couche de commande de ressources radio.
